# EUROPÄISCHE PATENTSCHRIFT

(11) **EP 3 502 365 B1**
(45) Veröffentlichungstag und Bekanntmachung des Hinweises auf die Patenterteilung: **07.06.2023**
(21) Anmeldenummer: 18199623.2
(22) Anmeldetag: 10.10.2018
(51) Int. Cl.: E03D 5/02, E03D 1/012, E03D 1/34, F16K 31/08, F16K 11/052, E03D 1/32

(54) **SANITÄRER GEGENSTAND, INSBESONDERE SPÜLKASTEN ODER ABLAUF- ODER FÜLLVENTIL FÜR EINEN SPÜLKASTEN**
SANITARY ARTICLE, ESPECIALLY CISTERN OR DRAINING OR FILLING VALVE FOR A CISTERN
OBJET SANITAIRE, EN PARTICULIER RÉSERVOIR DE CHASSE D'EAU OU SOUPAPE D'ÉCOULEMENT OU DE REMPLISSAGE POUR UN RÉSERVOIR DE CHASSE D'EAU

(30) Priorität: 19.12.2017 DE 102017130586
(43) Veröffentlichungstag der Anmeldung: 26.06.2019
(73) Patentinhaber: Viega Technology GmbH & Co. KG, 57439 Attendorn (DE)
(72) Erfinder: Rothstein, Gerhard, 42553 Velbert (DE); Arndt, Johannes, 57439 Attendorn (DE); Wessel, Heinz-Werner, 58840 Plettenberg (DE)
(74) Vertreter: Cohausz & Florack

(56) Entgegenhaltungen:
- EP-A1- 1 780 453
- DE-U1- 20 104 033
- FR-A1- 2 936 000
- GB-A- 1 270 879
- US-A- 2 035 747
- US-A- 4 450 867
- US-A1- 2015 335 216

## Beschreibung

Die Erfindung betrifft einen sanitären Gegenstand, und zwar einen Spülkasten oder ein Ablauf- oder Füllventil für einen Spülkasten, mit einem Gehäuse und einer Gehäusewand, die einen Nassbereich von einem Trockenbereich trennt, wobei in dem Nassbereich ein beweglicher Körper angeordnet ist, der mittels einer Betätigungsvorrichtung in unterschiedliche Stellungen bewegbar ist, wobei der bewegliche Körper im Nassbereich mit einem Magneten oder magnetischen Metallstück versehen ist, und wobei im Trockenbereich ein magnetisches oder magnetisiertes Gegenstück angeordnet ist, welches mit dem Magneten oder magnetischen Metallstück eine Magnetkupplung bildet.

Herkömmliche sanitäre Spülkästen, insbesondere Unterputzspülkästen, weisen einen Kastenkörper auf, in dessen Vorderwand oder Oberseite eine Revisionsöffnung ausgebildet ist. Funktionsteile, wie Ablaufventil und Füllventil, werden über die Revisionsöffnung im Kastenkörper montiert. Die Revisionsöffnung wird üblicherweise mit einer Betätigungsplatte kombiniert, die eine oder zwei beweglich gelagerte Bedientasten zur Auslösung einer Wasserspülung aufweist. Zu Wartungs- und Reparaturzwecken ermöglicht die Revisionsöffnung einen Zugang zu den im Kastenkörper montierten Funktionsteilen.

Insbesondere aus ästhetischen Gründen werden die Betätigungsplatten von Unterputzspülkästen regelmäßig relativ klein ausgeführt. Dementsprechend begrenzt sind die Abmessungen der Revisionsöffnungen. Der Einbau der im Kastenkörper anzuordnenden Funktionsteile gestaltet sich wegen der kleinen Revisionsöffnungen vergleichsweise schwierig.

In der DE 20 2007 017 789 U1 wird ein Unterputzspülkasten für ein WC- oder Urinalbecken mit einem Füllventil, einem Ablaufventil, einem Spülrohr und einer elektrischen Betätigungseinrichtung zur Auslösung einer Spülung vorgeschlagen, bei dem unterhalb des Spülwasser aufnehmenden Kastenkörpers ein Anschlussraum oder Gehäuse zur Aufnahme einer elektrischen Steuerung und eines absperrbaren Wasseranschlusses angeordnet ist, wobei der Anschlussraum oder das Gehäuse an seiner Vorderseite eine Revisionsöffnung aufweist, die so bemessen und angeordnet ist, dass sie nach der Montage des WC- oder Urinalbeckens durch letzteres verdeckt ist.

Der aus der DE 20 2007 017 789 U1 bekannte Unterputzspülkasten basiert auf der Erkenntnis, dass die Rückseite eines WC-Beckens üblicherweise eine erheblich größere Wandfläche abdeckt als eine dem WC-Becken zugeordnete herkömmliche Betätigungsplatte zur Auslösung einer Wasserspülung. Eine durch das WC-Becken unsichtbar abdeckbare Revisionsöffnung eines unterhalb des Unterputzspülkastens angeordneten Anschlussraums oder Gehäuses lässt sich daher erheblich größer ausführen als eine Revisionsöffnung eines Unterputzspülkastens, die oberhalb des WC-Beckens angeordnet ist und mit einer herkömmlichen Betätigungsplatte abgedeckt wird. Die größere Revisionsöffnung erleichtert den Anschluss und die Montage von Funktionsteilen des Unterputzspülkastens. Der Unterputzspülkasten erfordert für seine Inbetriebnahme keine Montagearbeiten innerhalb seines das Spülwasser aufnehmenden Kastenkörpers. Der Kastenkörper kann daher geschlossen, d.h. ohne Revisionsöffnung ausgebildet werden. Dementsprechend kann dann eine übliche Betätigungsplatte, welche im montierten Zustand eine oberhalb des WC-Beckens angeordnete Revisionsöffnung des Unterputzspülkastens abdeckt, weggelassen werden. Dieser bekannte Unterputzspülkasten ermöglicht somit eine ununterbrochene Wandflächengestaltung oberhalb des WC-Beckens, wodurch sich ein besonderes Design erzielen lässt. Beispielsweise lässt sich die Wändfläche oberhalb des WC-Beckens nun mit einem durchgängigen Wandbelag verkleiden, ohne dass der Wandbelag einen Ausschnitt für eine sonst übliche Betätigungsplatte beinhaltet.

Eine rein mechanische Betätigungseinrichtung zur Auslösung einer Spülung ist bei dem aus der DE 20 2007 017 789 U1 bekannten Unterputzspülkasten nicht vorgesehen. Vielmehr sind eine elektrische Betätigungseinrichtung und eine elektrische Steuerung vorgesehen, mittels denen ein elektrischer Stellantrieb betätigt wird, der das Ablaufventil öffnet und schließt. Das Ablaufventil ist in einem am Boden des Spülkastens angeschlossenen Spülrohr angeordnet und weist als Ventilkörper eine drehbare Klappe auf. Die drehbare Klappe ist an einer Welle befestigt, die mittels des Stellantriebes gedreht wird. Die Welle ist somit aus dem Nassbereich, nämlich dem Spülrohr, in den Trockenbereich geführt, der durch den Anschlussraum oder das Gehäuse zur Aufnahme der elektrischen Steuerung definiert ist. Die Durchführung der Welle durch die Wandung des Spülrohres erfordert eine Dichtung, welche die Durchgangsöffnung in der Rohrwandung abdichtet und zugleich eine Drehung der Welle zulässt. Derartige Wellendichtungen sind grundsätzlich bekannt. Sie beinhalten jedoch insbesondere aufgrund von Verschleißerscheinungen das Risiko eines Wasserschadens.

Die FR 2 936 000 A1 offenbart einen Spülkasten mit einer Gehäusewand, die einen Nassbereich von einem Trockenbereich trennt. In dem Nassbereich ist ein Schwimmer angeordnet, der mittels einer Betätigungsvorrichtung in unterschiedliche Stellungen bewegbar ist. Insbesondere offenbart die FR 2 936 000 A1 eine Toilettenspülvorrichtung mit einem Betätigungsgriff, der magnetisch mit einem drehbaren, in dem Spülkasten angeordneten Behälter gekoppelt ist, wobei der drehbare Behälter aus Metall gefertigt ist.

Die GB 1 270 879 A offenbart ein elektrisch gesteuertes Ventil, mit einem Ventilsitz, einem dem Ventilsitz zugeordneten Verschlusselement aus Eisenmetall, einer flexiblen Membran aus Gummi oder Kunststoff, welche auf einer ihrer Seiten das Verschlusselement aufweist, einem Bi-Metall-Element, das auf der anderen Seite der Membran angeordnet ist und einen Permanentmagneten trägt, der in einem unbeheizten Zustand des Bi-Metall-Elements von der Membran beabstandet ist, wobei das Verschlusselement in einer Normalposition in den Ventilsitz eingreift und in dieser Position mit Abstand zu der Membran angeordnet ist. Wenn zwischen zwei elektrischen Anschlüssen, die am Bi-Metall-Element angebracht sind, elektrischer Strom fließt, erwärmt sich das Bi-Metall-Element, mit dem Effekt, dass es sich derart biegt, dass der Magnet in Richtung der Membran bewegt wird, um das Verschlusselement von dem Ventilsitz wegzuziehen.

Die DE 201 04 033 U1 offenbart einen Spülkasten für ein WC, mit einem Kastenkörper zum Speichern von Spülwasser, einem Füllventil zum Füllen des Spülkastens mit Spülwasser, einem Ablaufventil, durch das Spülwasser in das Klosett abgebbar ist, einer Betätigungsvorrichtung zur Auslösung einer Spülung, einer Steuervorrichtung zur Steuerung des Spül- und Füllvorganges und mit Mitteln zur elektronischen Erfassung des Füllzustandes des Kastenkörpers, wobei die genannten Mittel den Füllzustand des Kastenkörpers während des Spülvorganges und des Füllvorganges stufenlos erfassen. Das Ablaufventil hat dabei einen Ventilkörper, der mit dem Ventilsitz zusammenarbeitet und mittels eines Elektromagneten vertikal bewegbar ist.

Die US 2015/0335216 A1 offenbart ein automatisches Toilettenspülsystem, mit einem universellen Spülhebel, der an verschiedenen Stellen innerhalb eines Toilettenspülkastens angebracht werden kann und einen Spülvorgang auslöst, wobei der während der Betätigung des Spülhebels der Toilettendeckel geschlossen wird. Hierzu ist im Toilettendeckel ein Magnet integriert, der mit einem an dem Spülhebel angebrachten Magneten derart zusammenwirkt, dass sich die Magnete abstoßen oder anziehen.

Der vorliegenden Erfindung liegt die Aufgabe zugrunde, einen sanitären Gegenstand der eingangs genannten Art anzugeben, bei dem sich der im Nassbereich angeordnete bewegliche Körper ohne Risiko eines Wasserschadens zuverlässig ansteuern lässt. Diese Aufgabe wird durch einen sanitären Gegenstand mit den in Anspruch 1 angegebenen Merkmalen gelöst. Bevorzugte und vorteilhafte Ausgestaltungen des erfindungsgemäßen Gegenstandes sind in den Unteransprüchen angegeben.

Der erfindungsgemäße Gegenstand, bei dem es sich um einen Spülkasten oder ein Ablauf- oder Füllventil für einen Spülkasten handelt, ist unter anderem dadurch gekennzeichnet, dass das im Trockenbereich angeordnete magnetische oder magnetisierte Gegenstück in einem verfahrbaren oder verschiebbaren Träger gehalten ist, wobei der mit einem Anschluss zur Anbindung eines Kraftübertragungsmittels, vorzugweise eines Bowdenzuges oder einer Betätigungsstange, versehen ist, wobei der bewegliche Körper ein Ventilkörper ist.. Durch die Erfindung wird eine leckagefreie Ansteuerung eines in einem Nassbereich angeordneten beweglichen Körpers, und zwar Ventilkörpers ermöglicht und das Risiko eines Wasserschadens zuverlässig beseitigt.

Die einander zugeordneten Kupplungsstücke der Magnetkupplung, die einerseits im Trockenbereich und andererseits im Nassbereich angeordnet sind, sind vorzugsweise so ausgeführt, dass sie sich aufgrund des Magnetismus einander anziehen. Es liegt allerdings auch im Rahmen der Erfindung, dass die Kupplungsstücke der Magnetkupplung so ausgeführt sind, dass sie sich aufgrund des Magnetismus abstoßen. Der im Nassbereich angeordnete bewegliche Körper kann dabei mit einem Federelement in eine Ausgangsstellung vorgespannt sein, aus der er mittels des im Trockenbereich angeordneten Kupplungsstücks der Magnetkupplung, welches das im Nassbereich angeordnete Kupplungsstück der Magnetkupplung abstößt, in eine andere Stellung gegen die Kraft des Federelements bewegt werden kann.

Die Erfindung umfasst insbesondere eine Ausgestaltung, bei der die einander zugeordneten Kupplungsstücke der Magnetkupplung, die einerseits im Trockenbereich und andererseits im Nassbereich angeordnet sind, sich aufgrund des Magnetismus ständig einander anziehen oder alternativ ständig abstoßen. Auch umfasst die Erfindung insbesondere eine Ausgestaltung, bei welcher der im Nassbereich angeordnete bewegliche Körper als das im Nassbereich angeordnete Kupplungsstück beim Bewegen, z.B. Verfahren oder Verschieben des im Trockenbereich angeordneten magnetischen oder magnetisierten Gegenstücks (Kupplungsstücks) synchron mit dem Gegenstück mitbewegt wird.

Die einander zugeordneten Kupplungsstücke der Magnetkupplung, die einerseits im Trockenbereich und andererseits im Nassbereich angeordnet sind, sind vorzugsweise jeweils mit geringem Abstand zu der Gehäusewand, die den Nassbereich von dem Trockenbereich trennt, gelagert. Der Abstand des jeweiligen Magnetkupplungsstücks von der Gehäusewand kann dabei beispielsweise im Bereich von 0,1 bis 2 mm liegen.

Eine vorteilhafte Ausgestaltung der Erfindung ist dadurch gekennzeichnet, dass der bewegliche Körper, und zwar der Ventilkörper, schwenkbar in dem Gehäuse gelagert ist. Durch diese Ausgestaltung lässt sich auf konstruktionstechnisch günstige Weise eine zuverlässige Ventilfunktion erzielen bzw. sicherstellen. Durch die Drehlagerung (Schwenklagerung) des Ventilkörpers kann ein sehr kompakt bauendes Ventil, insbesondere Steuerventil verwirklicht werden.

Nach einer weiteren vorteilhaften Ausgestaltung der Erfindung ist der Magnet oder das magnetische Metallstück an dem dem Schwenklager bzw. einer Schwenkachse abgewandten Ende des beweglichen Körpers angeordnet ist. Hierdurch ist die Magnetkupplung am Ende eines Hebelarms angeordnet. Der Hebelarm, d.h. der bewegliche Körper, kann somit sehr fein aus einer Schwenkstellung in eine andere Schwenkstellung und umgekehrt bewegt werden, indem das im Trockenbereich angeordnete magnetische oder magnetisierte Gegenstück entlang eines relativ kleinen Stellweges bewegt wird.

Erfindungsgemäß ist das im Trockenbereich angeordnete magnetische oder magnetisierte Gegenstück in einem verfahrbaren oder verschiebbaren Träger gehalten. Der Träger kann beispielsweise mit mindestens einem Gleitelement und/oder Laufrollen versehen sein. Insbesondere wenn der Träger mit Laufrollen versehen ist, wird erreicht, dass die zur Bewegung des Trägers erforderlichen Kräfte relativ gering sind. Somit lässt sich der im Nassbereich angeordnete bewegliche Körper besonders leichtgängig und damit komfortabel betätigen.

Eine weitere Ausgestaltung der Erfindung sieht vor, dass die Gehäusewand einen bogenförmigen Wandabschnitt aufweist, der zum Trockenbereich hin konvex gekrümmt ist, wobei der Träger auf der konvexen Fläche des bogenförmigen Wandabschnitts angeordnet ist. Diese Ausgestaltung ist insbesondere dann günstig, wenn der im Nassbereich angeordnete bewegliche Körper in Form eines schwenkbar gelagerten Ventilhebels ausgeführt ist.

Hinsichtlich der Steuerung des Trägers sieht die Erfindung vor, dass der Träger mit einem Anschluss zur Anbindung eines Kraftübertragungsmittels, vorzugweise eines Bowdenzuges oder einer Betätigungsstange, versehen ist. Das Kraftübertragungsmittel kann dabei an seinem dem Träger abgewandten Ende an einem mechanischen Bedienelement, z.B. einem Bedienhebel, oder an einem elektrischen Stellelement, z.B. einem Motor, angeschlossen werden oder sein.

Eine bevorzugte Ausgestaltung der Erfindung ist dadurch gekennzeichnet, dass der bewegliche Körper mindestens einen Ventilkopf aufweist, dem ein in dem Gehäuse ausgebildeter Ventilsitz zugeordnet ist. Insbesondere kann der bewegliche Körper zwei entgegengesetzt gerichtete Ventilköpfe aufweisen, denen in dem Gehäuse ein eine Einlassöffnung definierender Ventilsitz bzw. ein eine Auslassöffnung definierender Ventilsitz zugeordnet sind. Für eine optimale Ventilfunktion ist es dabei günstig, wenn gemäß einer weiteren bevorzugten Ausgestaltung der Ventilkopf oder der Ventilsitz mit einem Dichtring aus gummielastischem Material versehen ist.

Nachfolgend wird die Erfindung anhand einer ein Ausführungsbeispiel darstellenden Zeichnung näher erläutert. Es zeigen:
- Fig. 1: ein Ablaufventil in geschlossenem Zustand, in einer Vorderansicht;
- Fig. 2: das Ablaufventil aus Fig. 1 in einer Draufsicht;
- Fig. 3: das Ablaufventil in einer Schnittansicht entlang der Schnittlinie A-A in Fig. 2;
- Fig. 4: das Ablaufventil in einer Schnittansicht entlang der Schnittlinie B-B in Fig. 3;
- Fig. 5: das Ablaufventil in einer Schnittansicht entlang der Schnittlinie D-D in Fig. 3;
- Fig. 6: das Ablaufventil in geöffnetem Zustand in einer Schnittansicht entlang der Schnittlinie A-A in Fig. 2;
- Fig. 7: das Ablaufventil in geöffnetem Zustand in einer Schnittansicht entlang der Schnittlinie D-D in Fig. 3; und

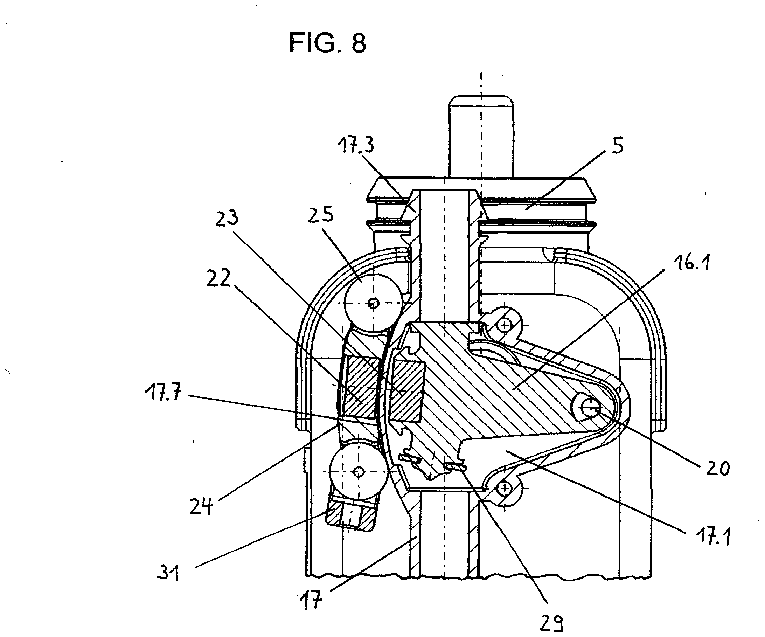

- Fig. 8: einen oberen Abschnitt des in Fig. 7 gezeigten Ablaufventils in vergrößertem Maßstab.

Das in der Zeichnung dargestellte Ablaufventil 1 ist für eine Kombination mit einem sanitären Spülkasten (nicht gezeigt), insbesondere einem Unterputzspülkasten bestimmt. Herkömmliche Ablaufventile für sanitäre Spülkästen sind innerhalb des Spülkastens angeordnet und für Wartungs- oder Reparaturzwecke über eine oberhalb des WC- oder Urinalbeckens angeordnete Revisionsöffnung zugänglich.

Das Ablaufventil 1 ist dagegen so ausgeführt, dass es im montierten Zustand unterhalb und damit außerhalb des Spülkastens angeordnet ist. Das Ablaufventil 1 ermöglicht somit eine Verlegung der bei herkömmlichen Unterputzspülkästen oberhalb des WC- oder Urinalbeckens angeordneten Revisionsöffnung an eine Stelle, die hinter dem WC- oder Urinalbecken liegt, so dass die Revisionsöffnung durch das WC- oder Urinalbecken vollständig verdeckt wird.

Das Ablaufventil 1 hat ein geschlossenes Ventilgehäuse (Ablaufventilgehäuse) 2, das mit einer Eingangsöffnung 3 und einer Ablauföffnung 4 versehen ist. Die Eingangsöffnung 3 ist durch einen Anschlussstutzen 5 definiert, der vorzugsweise an der Oberseite des Ventilgehäuses 2 angeordnet ist. Über den Anschlussstutzen 5 kann das Ablaufventil 1 an einen mit dem Spülkasten verbundenen Spülrohrstutzen oder an eine mit dem Spülkasten verbundene Spülrohrleitung angeschlossen werden.

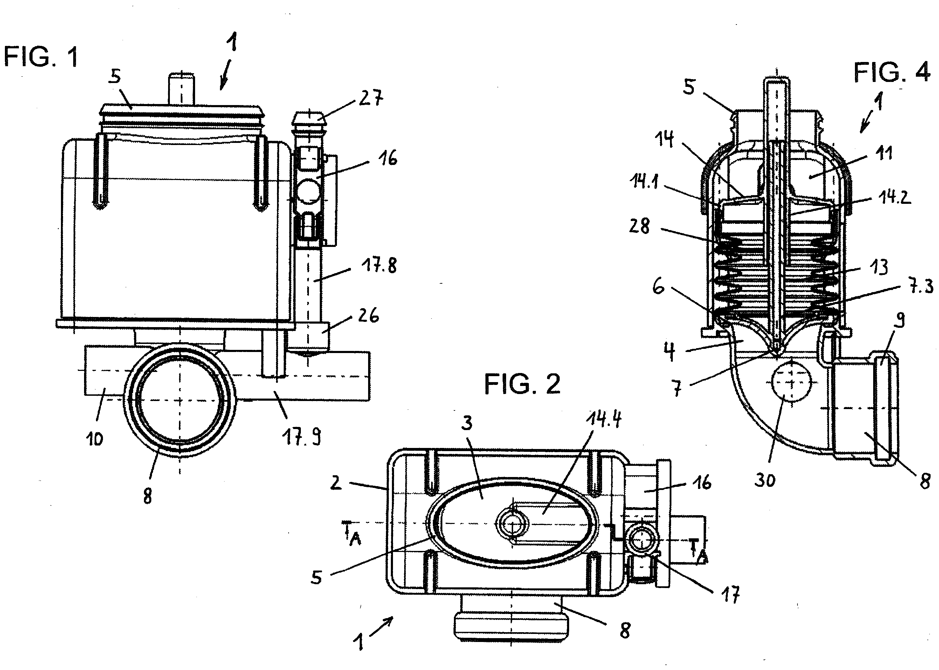

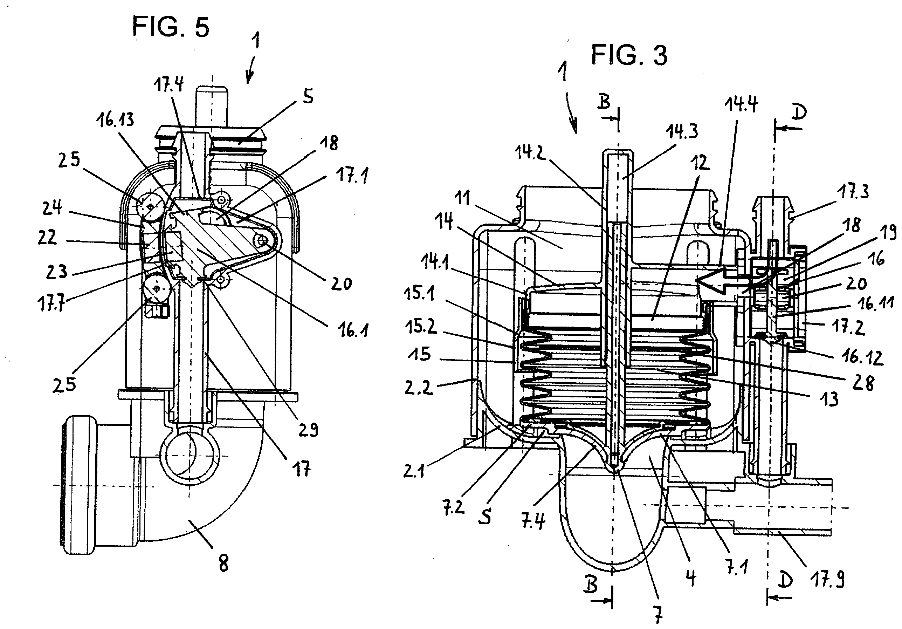

Die Ablauföffnung 4 ist durch einen Ventilsitz 6 begrenzt. Der Ventilsitz 6 ist in Form eines ringförmig, vorzugsweise kreisringförmigen Vorsprungs ausgebildet, der in das Innere des Ventilgehäuses 2 geringfügig vorsteht. Mit 7 ist ein Ventilkörper bezeichnet, der im geschlossenen Zustand des Ablaufventils 1 auf dem Ventilsitz 6 dichtend aufliegt (vgl. Fig. 3 und 4).

An den Ventilsitz 6 schließt sich in Abflussrichtung ein Ablaufrohrstück 8 an, das beispielsweise in Form eines Rohrwinkels ausgebildet ist. Das Ende des Ablaufrohrstücks 8 kann unmittelbar mit dem Spülwasseranschluss (nicht gezeigt) eines WC- oder Urinalbeckens verbunden werden. Das Ende des Ablaufrohrstückes 8 ist hierzu beispielsweise in Form einer Anschlussmuffe ausgebildet, die innenseitig eine Ringnut 9 zur Aufnahme eines Dichtungsringes aufweist.

Mit 10 ist ein in das Ablaufrohrstück 8 mündender Rohrstutzen bezeichnet, der als Anschluss für ein an einer Überlauföffnung des Spülkastens angeschlossenes Überlaufrohr (nicht gezeigt) dient.

Das Ventilgehäuse 2 definiert eine dem Ventilsitz 6 in Abflussrichtung vorgeordnete Gehäusekammer 11. Die Gehäusekammer 11 dient der Aufnahme des Ventilkörpers 7 sowie der Aufnahme von Wasser. Das Ventilgehäuse 2 ist aus einem unteren Gehäuseteil 2.1 und einem oberen Gehäuseteil 2.2 zusammengesetzt, die flüssigkeitsdicht miteinander verbunden sind. Das untere Gehäuseteil 2.1 umfasst die Ablauföffnung 4 mit dem Ventilsitz 6 und das Ablaufrohrstück 8, während das obere Gehäuseteil 2.2 den Anschlussstutzen 5 mit der Eingangsöffnung 3 umfasst. Das Ventilgehäuse 2 ist beispielsweise im Wesentlichen kastenförmig ausgebildet, wobei seine Vorderseitenfläche als auch seine Rückseitenfläche deutlich breiter sind als seine jeweilige Seitenfläche. Das Ventilgehäuse 2 besitzt somit einen im Wesentlichen rechteckigen Grundriss (vgl. Fig. 2). Der am oberen Gehäuseteil 2.2 einstückig angeformte Anschlussstutzen 5 weist ein im Wesentlichen ovales oder ellipsenförmiges Rohrprofil auf. Die Hauptachse des Rohrprofils verläuft parallel zu der Vorderseite und der Rückseite des Gehäuseteils 2.2.

Der Ventilkörper 7 ist mit einer Nebenkammer 12 zur Aufnahme von Wasser versehen. Die Nebenkammer 12 ist teilweise durch einen flexiblen und beweglichen Wandabschnitt 13 begrenzt, so dass ihr Wasseraufnahmevolumen veränderlich ist. Der flexible und bewegliche Wandabschnitt 13 ist formstabilisiert. Er weist hierzu beispielsweise einen oder mehrere sich mit bewegende Stützringe 28 auf, die an seiner Innenseite angeordnet sind. In dem dargestellten Ausführungsbeispiel ist der flexible und bewegliche Wandabschnitt 13 durch einen Faltenbalg gebildet. Der Faltenbalg 13 ist beispielsweise aus gummielastischem Material oder aus Kunststoff gefertigt.

Des Weiteren ist die Nebenkammer 12 teilweise durch einen kappenförmigen Gehäuseabschnitt 14 begrenzt. Der kappenförmige Gehäuseabschnitt 14 weist einen dem Ventilsitz 6 zugewandten Kragen 14.1 auf, welcher der flüssigkeitsdichten Anbindung des oberen Endes des Faltenbalgs 13 dient. Zudem ist der kappenförmige Gehäuseabschnitt 14 mit einem manschettenartigen Kragen 15 versehen. Der Kragen 15 endet mit Abstand oberhalb des Ventilsitzes 6. Der manschettenartige Kragen 15 umschließt das obere Ende des Faltenbalgs 13 und ist mit dem Kragen 14.1 des kappenförmigen Gehäuseabschnittes 14 unmittelbar oder über den Faltenbalg 13 verbunden. Optional weist der Kragen 15 unterhalb seines oberen Verbindungsabschnitts einen beispielsweise konisch geformten Übergangsabschnitt 15.1 und einen sich daran anschließenden durchmessererweiterten Abschnitt 15.2 auf. Der durchmessererweiterte Abschnitt 15.2 umgreift die Außenseite des Faltenbalgs 13 mit Spiel.

Das untere Ende des Faltenbalgs 13 ist mit einem tellerförmigen Abschnitt 7.1 des Ventilkörpers 7 flüssigkeitsdicht verbunden. Der tellerförmige Abschnitt 7.1 weist einen Randabschnitt 7.2 auf, der den Ventilsitz 6 seitlich überragt und im geschlossenen Zustand des Ablaufventils 1 mit dem Boden der Gehäusekammer 2 einen Spalt S begrenzt. Der Randabschnitt 7.2 ist gegenüber dem den Ventilsitz 6 berührenden Ventilkörperabschnitt um wenige Millimeter axial versetzt ausgebildet (Fig. 3).

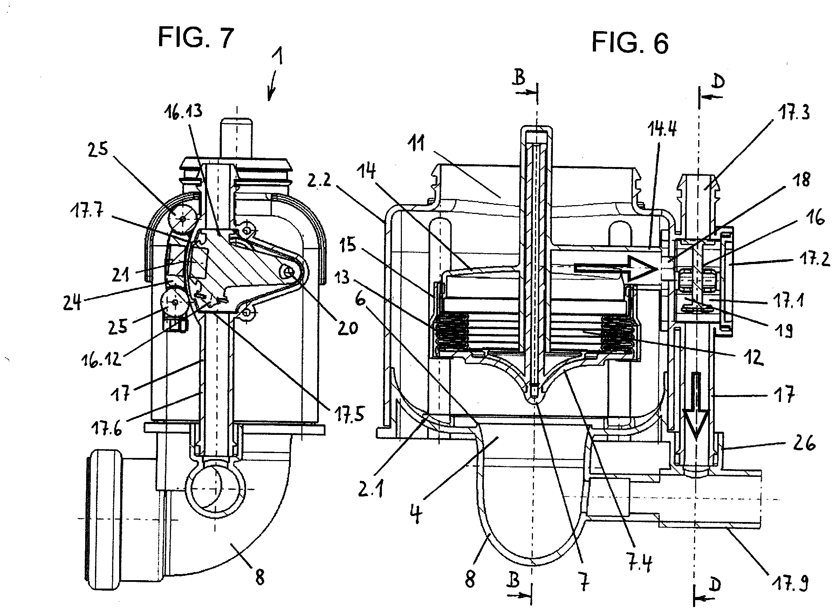

Des Weiteren weist der Ventilkörper 7 einen Ventilschaft 7.3 auf, der in einer hülsenförmigen Aufnahme 14.2 verschiebbar geführt ist. Die Aufnahme (Führung) 14.2 ist mit dem kappenförmigen Gehäuseabschnitt 14 bzw. oberen Wandabschnitt der Nebenkammer 12 verbunden. Das obere, geschlossene Ende der hülsenförmigen Führung 14.2 steht gegenüber der Oberseite des kappenförmigen Gehäuseabschnitts 14 vor und erstreckt sich beispielsweise über den Anschlussstutzen 5 hinaus in Richtung des (nicht gezeigten) Spülkastens. Das untere, offene Ende der Führung 14.2 ragt in den Faltenbalg 13 hinein und endet oberhalb der Unterkante des Kragens 15 (vgl. Fig. 3 und 6). Der zylindrische Ventilschaft 7.3 ist rohrförmig ausgebildet und zu dem Hohlraum 14.3 in der hülsenförmigen Führung 14.2 hin offen.

Der tellerförmige Abschnitt 7.1 des Ventilkörpers weist eine Spülwasserumlenkfläche 7.4 auf, die im geschlossenen Zustand des Ablaufventils 1 in die durch den Ventilsitz 6 begrenzte Ablauföffnung 4 ragt. Die Spülwasserumlenkfläche 7.4 ist hier beispielsweise in Form eines rotationssymmetrisch umlaufenden konkaven Bogens ausgebildet.

Der Nebenkammer 12 ist ein Ablauf-Nebenventil 16 zugeordnet, welches in einer ersten Stellung ein Zufließen von Wasser in die Nebenkammer 12 und in einer zweiten Stellung ein Abfließen von Wasser aus der Nebenkammer 12 gestattet. Das Ablauf-Nebenventil 16 ist in einer Bypass-Leitung 17 angeordnet, welche den Ventilsitz 6 bzw. die dort befindliche Ablauföffnung 4 überbrückt. Die Bypass-Leitung 17 ist eingangsseitig beispielsweise am Spülkasten angeschlossen und mündet in das Ablaufrohrstück 8, welches in Abflussrichtung auf den Ventilsitz 6 folgt. Die Mündung 30 der Bypass-Leitung 17 im Ablaufrohrstück 8 ist in Fig. 4 zu erkennen.

Das Ablauf-Nebenventil 16 enthält einen beweglichen Körper (Ventilkörper) 16.1, der in einem in der Bypass-Leitung 17 ausgebildeten Aufnahmeraum 17.1 schwenkbar gelagert ist. Der Aufnahmeraum 17.1, der auch als Ventilkammer bezeichnet werden kann, ist über einen Kanal oder Durchgang 18 mit der Nebenkammer 12 hydraulisch verbunden. Der Durchgang 18 mündet in den kappenförmigen Gehäuseabschnitt 14 der Nebenkammer 12 bzw. in einen an dem kappenförmigen Gehäuseabschnitt vorgesehenen Anschlussstutzen 14.4. Die Bypass-Leitung 17 weist im Bereich der Ventilkammer 17.1 einen Flüssigkeit abdichtenden Deckel 17.2 auf.

Der Ventilkörper 16.1 des Nebenventils 16 weist einen relativ dünnen stegförmigen Hebelabschnitt 16.11 auf, der beidseitig von der Ventilkammerwandung bzw. dem Deckel 17.2 beabstandet ist und somit Wasserdurchgänge 19 begrenzt. An seinem der Schwenkachse 20 abgewandten Ende ist der Ventilkörper 16.1 mit einem unteren bzw. ersten Ventilkopf 16.12 versehen, welcher in einer Schließstellung des Nebenventils 16 die Bypass-Leitung 17 in der Weise absperrt, dass der Ventilkammer 17.1 über den oberen Bypass-Leitungsabschnitt 17.3 zulaufendes Wasser in die Nebenkammer 12 läuft. Des Weiteren ist der Ventilkörper 16.1 an seinem der Schwenkachse 20 abgewandten Ende mit einem oberen bzw. zweiten Ventilkopf 16.13 versehen, welcher in einer Offenstellung des Nebenventils 16 die Einlassöffnung 17.4 der Ventilkammer 17.1 verschließt, so dass aus der Nebenkammer 12 abfließendes Wasser nicht in den oberen Bypass-Leitungsabschnitt 17.3, sondern in die Auslassöffnung 17.5 der Ventilkammer 17.1 und somit in den unteren Bypass-Leitungsabschnitt 17.6 fließt. Der untere bzw. erste Ventilkopf 16.12 ist mit einem gummielastischen Dichtring 29 versehen. Der obere bzw. zweite Ventilkopf 16.13 benötigt dagegen eine solche Dichtung nicht.

Der bewegliche Körper (Ventilkörper) 16.1 des Nebenventils 16 ist mit einer Magnetkupplung 21 versehen. Hierzu ist der im Nassbereich angeordnete Ventilkörper 16.1 mit einem magnetischen Metallstück oder Magneten 23 versehen, während außerhalb des Aufnahmeraums 17.1 des Ventilkörpers 16.1, also im Trockenbereich, ein magnetisches oder magnetisiertes Gegenstück 22 angeordnet ist; welches mit dem magnetischen Metallstück oder Magneten 23 die Magnetkupplung bildet. Der Einfachheit halber werden die einander zugeordneten Kupplungsstücke 22, 23 der Magnetkupplung 21 nachfolgend als Magnete bezeichnet, obwohl eines dieser Kupplungsstücke auch als magnetisches Metallstück bzw. als magnetisches Gegenstück ausgeführt sein kann.

Die den Aufnahmeraum (Ventilkammer) 17.1 begrenzende Gehäusewand weist einen bogenförmigen Wandabschnitt 17.7 auf, der zum Trockenbereich hin konvex gekrümmt ist. Vorzugsweise ist der Wandabschnitt 17.7 kreisbogensegmentförmig ausgebildet.

Der außerhalb des Aufnahmeraums 17.1 angeordnete Magnet 22 ist an einem verschiebbaren oder verfahrbaren Träger 24 befestigt. Mit 25 sind Laufrollen des Trägers 24 bezeichnet. Der Wagen oder Träger 24 ist auf der konvexen Fläche des bogenförmigen Wandabschnitts 17.7 angeordnet. Der Träger 24 ist mit einem Anschluss 31 zur Anbindung eines Kraftübertragungsmittels (nicht gezeigt) versehen, bei dem es beispielsweise um einen Bowdenzuges oder eine Betätigungsstange handelt.

Der innerhalb des Aufnahmeraums 17.1 angeordnete Magnet 23 ist an dem von der Schwenkachse 20 weiter beabstandeten Ende des Ventilkörpers 16.1 befestigt. Die Magnete 22, 23 sind an dem verfahrbaren Träger 24 bzw. dem Ventilkörper 16.1 derart befestigt, dass sie mit geringem Abstand zu bogenförmigen Wandabschnitt 17.7 angeordnet sind. Der verfahrbare Träger 24 liegt vorzugsweise nur mit seinen Laufrollen 25 an der Außenseite des Wandabschnitts 17.7 an.

Beim Verschieben oder Verfahren des im Trockenbereich angeordneten Trägers 24 bzw. Magnets 22 entlang des Wandabschnitts 17.7 wird der im Nassbereich angeordnete Magnet 23 und damit der bewegliche Körper (Ventilkörper) 16.1 synchron mit dem Träger 24 und dem Magnet 22 mitbewegt.

Fig. 3 zeigt die Stellung des Nebenventils 16, bei welcher Wasser in die Nebenkammer 12 läuft. Der Wasserfluss ist durch den in die Nebenkammer 12 weisenden Pfeil angedeutet. Fig. 6 zeigt dagegen die Stellung des Nebenventils 16, bei welcher Wasser aus der Nebenkammer 12 ablaufen kann. Das Ablaufen des Wassers aus der Nebenkammer 12 ist durch zwei Pfeile angedeutet.

Im geschlossenen Zustand des Ablaufventils 1 gemäß Fig. 3 entspricht der Wasserdruck in der Gehäusekammer (Hauptkammer) 11 dem Wasserdruck in der Nebenkammer 12. Die dem Wasserdruck in der Hauptkammer 11 ausgesetzte Fläche des tellerförmigen Abschnitts 7.1 des Ventilkörpers 7 ist dann deutlich kleiner als die dem Wasserdruck in der Nebenkammer 12 ausgesetzte Fläche des tellerförmigen Abschnitts 7.1 des Ventilkörpers. Somit verschließt der Ventilkörper 7 die durch den Ventilsitz 6 begrenzte Ablauföffnung 4 (Fig. 3).

Wird nun das Ablauf-Nebenventil 16.1 geöffnet, so fließt Wasser aus der Nebenkammer 12 über die Bypass-Leitung 17 ab. Dabei fällt der Wasserdruck in der Nebenkammer 12 gegenüber dem Wasserdruck in der Hauptkammer 11 ab. Der höhere Wasserdruck in der Hauptkammer 11 bewirkt ein Abheben des Ventilkörpers 7 vom Ventilsitz 6 verbunden mit einem Zusammendrücken des Faltenbalgs 13 (Fig. 6).

Die Bypass-Leitung 17 umfasst beispielsweise zwei Rohrabschnitte 17.8, 17.9, die durch eine flüssigkeitsdichte Steckverbindung 26 miteinander verbunden werden bzw. sind. Ein erster Rohrabschnitt 17.8 der Bypass-Leitung 17 ist vorzugsweise einstückig oder stoffschlüssig mit dem oberen Gehäuseteil 2.2 des Ablaufventils 1 verbunden und enthält das Ablauf-Nebenventil 16. Der Rohrabschnitt 17.8 ist eingangsseitig mit einem Steckanschluss 27 versehen. Der zweite Rohrabschnitt 17.9 der Bypass-Leitung, welcher in das Ablaufrohrstück 8 mündet, ist mit dem unteren Gehäuseteil 2.1 verbunden. Die flüssigkeitsdichte Steckverbindung 26 umfasst einen muffenförmigen Anschluss, der an der Außenseite des zweiten Rohrabschnitts 17.9 ausgebildet bzw. angeformt ist. Die Rohrachsen der beiden Rohrabschnitte 17.8, 17.9 der Bypass-Leitung 17 verlaufen quer, beispielsweise im Wesentlichen rechtwinklig zueinander.

Die Ausführung der Erfindung ist nicht auf das in der Zeichnung dargestellte Ausführungsbeispiel beschränkt. Vielmehr sind zahlreiche Varianten denkbar, die auch bei einer von dem Beispiel abweichenden Gestaltung von der in den Ansprüchen offenbarten Erfindung Gebrauch machen. So kann die erfindungsgemäße Magnetkupplung beispielsweise auch in Kombination mit einem sanitären Spülkasten verwirklicht werden, um einen im Nassbereich des Spülkastens angeordneten Ventilkörper, insbesondere einen in Form eines Überlaufrohres ausgebildeten Ventilkörper zu steuern. Des Weiteren kann die erfindungsgemäße Magnetkupplung beispielsweise auch in einem Füllventil für einen sanitären Spülkasten verwirklicht werden.

## Patentansprüche

1. Sanitärer Gegenstand, und zwar Spülkasten oder Füll- oder Ablaufventil (1) für einen Spülkasten, mit einem Gehäuse und einer Gehäusewand, die einen Nassbereich des sanitären Gegenstands von einem Trockenbereich des sanitären Gegenstands trennt, wobei in dem Nassbereich ein beweglicher Körper (16.1) angeordnet ist, der mittels einer Betätigungsvorrichtung in unterschiedliche Stellungen bewegbar ist,
wobei der bewegliche Körper (16.1) im Nassbereich mit einem Magneten (23) oder magnetischen Metallstück versehen ist, wobei im Trockenbereich ein magnetisches oder magnetisiertes Gegenstück (22) angeordnet ist, welches mit dem Magneten (23) oder magnetischen Metallstück eine Magnetkupplung (21) bildet, wobei das im Trockenbereich angeordnete magnetische oder magnetisierte Gegenstück (22) in einem verfahrbaren oder verschiebbaren Träger (24) gehalten ist, wobei der Träger (24) mit einem Anschluss (31) zur Anbindung eines Kraftübertragungsmittels, vorzugweise eines Bowdenzuges oder einer Betätigungsstange, versehen ist,
und wobei der bewegliche Körper (16.1) ein Ventilkörper ist.

2. Sanitärer Gegenstand nach Anspruch 1, **dadurch gekennzeichnet, dass** der bewegliche Körper (16.1) schwenkbar in dem Gehäuse gelagert ist.

3. Sanitärer Gegenstand nach Anspruch 2, **dadurch gekennzeichnet, dass** der Magnet (23) oder das magnetische Metallstück an dem einer Schwenkachse (20) abgewandten Ende des beweglichen Körpers (16.1) angeordnet ist.

4. Sanitärer Gegenstand nach einem der Ansprüche 1 bis 3, **dadurch gekennzeichnet, dass** der Träger (24) mit mindestens einem Gleitelement und/oder Laufrollen (25) versehen ist.

5. Sanitärer Gegenstand nach einem der Ansprüche 1 bis 4, **dadurch gekennzeichnet, dass** die Gehäusewand einen bogenförmigen Wandabschnitt (17.7) aufweist, der zum Trockenbereich hin konvex gekrümmt ist, wobei der Träger (24) auf der konvexen Fläche des bogenförmigen Wandabschnitts (17.7) angeordnet ist.

6. Sanitärer Gegenstand nach einem der Ansprüche 1 bis 5, **dadurch gekennzeichnet, dass** der bewegliche Körper (16.1) mindestens einen Ventilkopf (16.12) aufweist, dem ein in dem Gehäuse ausgebildeter Ventilsitz zugeordnet ist.

7. Sanitärer Gegenstand nach einem der Ansprüche 1 bis 6, **dadurch gekennzeichnet, dass** der bewegliche Körper (16.1) zwei entgegengesetzt gerichtete Ventilköpfe (16.12, 16.13) aufweist, denen in dem Gehäuse ein eine Einlassöffnung (17.4) definierender Ventilsitz bzw. ein eine Auslassöffnung (17.5) definierender Ventilsitz zugeordnet sind.

8. Sanitärer Gegenstand nach Anspruch 6 oder 7, **dadurch gekennzeichnet, dass** der Ventilkopf (16.12) oder der Ventilsitz mit einem Dichtring (29) aus gummielastischem Material versehen ist.

## Claims

1. Sanitary article, namely a flushing cistern or filling or drain valve (1) for a flushing cistern, with a housing and a housing wall which separates a wet area of the sanitary article from a dry area of the sanitary article, wherein a movable body (16.1) is arranged in the wet area which can be moved into different positions by means of an actuating device,
wherein the movable body (16.1) is provided in the wet area with a magnet (23) or magnetic metal piece, wherein in the dry area a magnetic or magnetized counterpart (22) is arranged which forms a magnetic coupling (21) with the magnet (23) or magnetic metal piece, wherein the magnetic or magnetized counterpart (22) arranged in the dry region is held in a movable or displaceable carrier (24), wherein the carrier (24) is provided with a connection (31) for connecting a force transmission means, preferably a Bowden cable or an actuating rod,
and wherein the movable body (16.1) is a valve body.

2. Sanitary article according to claim 1, **characterized in that** the movable body (16.1) is pivotably mounted in the housing.

3. Sanitary article according to claim 2, **characterized in that** the magnet (23) or the magnetic metal piece is arranged at the end of the movable body (16.1) facing away from a pivot axis (20).

4. Sanitary article according to any one of the claims 1 to 3, **characterized in that** the carrier (24) is provided with at least one sliding element and/or rollers (25).

5. Sanitary article according to any one of claims 1 to 4, **characterized in that** the housing wall has an arcuate wall portion (17.7) which is convexly curved towards the dry area, the carrier (24) being arranged on the convex surface of the arcuate wall portion (17:7).

6. Sanitary article according to any one of claims 1 to 5, **characterized in that** the movable body (16.1) comprises at least one valve head (16.12) with which a valve seat formed in the housing is associated.

7. Sanitary article according to any one of claims 1 to 6, **characterized in that** the movable body (16.1) has two oppositely directed valve heads (16.12, 16.13), with which a valve seat defining an inlet opening (17.4) and a valve seat defining an outlet opening (17.5) are associated in the housing, respectively.

8. Sanitary article according to claim 6 or 7, **characterized in that** the valve head (16.12) or the valve seat is provided with a sealing ring (29) of rubber-elastic material.

## Revendications

1. Objet sanitaire, à savoir réservoir de chasse d'eau ou soupape d'écoulement ou de remplissage (1) pour un réservoir de chasse d'eau, avec un boîtier et une paroi de boîtier qui sépare une zone humide de l'objet sanitaire d'une zone sèche de l'objet sanitaire, dans lequel est disposé dans la zone humide un corps mobile (16.1) qui est déplaçable dans différentes positions au moyen d'un dispositif d'actionnement, dans lequel le corps mobile (16.1) est doté dans la zone humide d'un aimant (23) ou d'une pièce métallique magnétique, dans lequel est disposé dans la zone sèche, un pendant magnétique ou magnétisé (22), lequel forme un accouplement à aimant (21) avec l'aimant (23) ou la pièce métallique magnétique, dans lequel le pendant magnétique ou magnétisé (22) disposé dans la zone sèche est maintenu dans un support déplaçable ou décalable (24), dans lequel le support (24) est doté d'un raccord (31) pour attacher un moyen de transmission de force, de préférence un câble Bowden ou une tige d'actionnement, et dans lequel le corps mobile (16.1) est un corps de soupape.

2. Objet sanitaire selon la revendication 1, **caractérisé en ce que** le corps mobile (16.1) est logé d'une manière pivotante dans le boîtier.

3. Objet sanitaire selon la revendication 2, **caractérisé en ce que** l'aimant (23) ou la pièce métallique magnétique est disposé(e) à l'extrémité opposée à un axe de pivotement (20) du corps mobile (16.1).

4. Objet sanitaire selon l'une des revendications 1 à 3, **caractérisé en ce que** le support (24) est doté d'au moins un élément coulissant et / ou d'une roulette (25).

5. Objet sanitaire selon l'une des revendications 1 à 4, **caractérisé en ce que** la paroi de boîtier présente une section de paroi en forme d'arc (17.7) qui est recourbée d'une manière convexe vers la zone sèche, dans lequel le support (24) est disposé sur la surface convexe de la section de paroi en forme d'arc (17.7).

6. Objet sanitaire selon l'une des revendications 1 à 5, **caractérisé en ce que** le corps mobile (16.1) présente au moins une tête de soupape (16.12) à laquelle est affecté un siège de soupape conçu dans le boîtier.

7. Objet sanitaire selon l'une des revendications 1 à 6, **caractérisé en ce que** le corps mobile (16.1) présente deux têtes de soupape orientées de façon opposée (16.12, 16.13) auxquelles sont affectés dans le boîtier un siège de soupape définissant une ouverture d'admission (17.4) resp. un siège de soupape définissant une ouverture d'évacuation (17.5).

8. Objet sanitaire selon la revendication 6 ou 7, **caractérisé en ce que** la tête de soupape (16.12) ou le siège de soupape est doté(e) d'un anneau d'étanchéité (29) en matière caoutchouc élastique.
